# Europäisches Patentamt
# European Patent Office
# Office européen des brevets

(19)

(11) Numéro de publication : **0 373 060 B1**

(12) ## FASCICULE DE BREVET EUROPEEN

(45) Date de publication du fascicule du brevet :
**11.11.92 Bulletin 92/46**

(51) Int. Cl.$^5$ : **B65G 47/51, B65G 1/06**

(21) Numéro de dépôt : **89403353.9**

(22) Date de dépôt : **04.12.89**

(54) **Magasin de stockage de caissettes.**

(30) Priorité : **06.12.88 FR 8815971**

(43) Date de publication de la demande :
**13.06.90 Bulletin 90/24**

(45) Mention de la délivrance du brevet :
**11.11.92 Bulletin 92/46**

(84) Etats contractants désignés :
**DE GB IT**

(56) Documents cités :
**EP-A- 0 002 106**
**EP-A- 0 216 409**
**FR-E- 87 688**
**US-A- 2 591 971**
**US-A- 3 734 267**

(73) Titulaire : **LA POSTE, ETABLISSEMENT AUTONOME DE DROIT PUBLIC**
**20, Avenue de Ségur**
**F-75700 Paris (FR)**

(72) Inventeur : **Soulisse, Michel**
**Chemin de Bellevue**
**F-44360 Saint-Etienne De Montluc (FR)**

(74) Mandataire : **Armengaud Ainé, Alain et al**
**Cabinet ARMENGAUD AINE 3 Avenue Bugeaud**
**F-75116 Paris (FR)**

Jouve, 18, rue Saint-Denis, 75001 PARIS

## Description

La présente invention est relative à un magasin permettant d'effectuer l'aiguillage, le stockage et la restitution coordonnés de caissettes ou conteneurs similaires, à fond rigide ou semi-rigide, dans lesquels sont placés des objets divers, mais s'applique plus particulièrement à la gestion des mouvements de telles caissettes contenant des enveloppes de courrier postal, préalablement triées et mises en place dans ces caissettes avant d'être extraites de ces dernières pour être acheminées vers leurs lieux de distribution.

Néanmoins, il doit être entendu que l'invention s'applique également dans le cas où de telles caissettes contiennent d'autres objets, par exemple des ouvrages ou des livres pour la gestion d'une bibliothèque, des produits alimentaires, pharmaceutiques ou autres et d'une façon générale des éléments divers en quantités importantes qu'il convient de stocker momentanément, après prélèvement dans un circuit situé en amont du magasin où les caissettes sont chargées, avant d'être envoyées vers un circuit d'utilisation disposé en aval, où ces mêmes caissettes sont alors déchargées.

On sait que les installations actuelles de traitement du courrier en caissettes, ou plus généralement les installations permettant d'assurer le déplacement d'articles d'une position à une autre, telles que décrites par exemple dans le EP-A- 0 216 409 ou les US-A- 2 591 971 ou 3 734 267, comportent usuellement un convoyeur à tapis sur lequel les caissettes (ou les autres objets équivalents) sont déposées une à une pour être successivement acheminées depuis un poste de chargement en amont vers un poste de déchargement en aval du convoyeur. Or les cadences de traitement éventuellement différentes dans ces deux postes, exigent que le transfert des caissettes de l'un à l'autre s'effectue de façon discontinue, avec notamment un stockage plus ou moins prolongé de celles-ci dans un magasin intermédiaire où elles peuvent séjourner à la demande selon un processus convenablement géré et contrôlé. En outre, il peut être avantageux que, pendant leur séjour dans le magasin, les caissettes soient elles-mêmes classées ou orientées dans un ordre de succession différent de celui avec lequel elles sont arrivées jusqu'au magasin en provenance du poste de chargement, avant d'être sorties de ce magasin en direction du poste de déchargement.

La présente invention concerne un magasin de ce genre qui répond à ces objectifs, en permettant son alimentation en continu quelle que soit l'affectation ultérieure de la caissette, le stockage de celle-ci pouvant être réalisé à l'unité ou en continu dans une quelconque de plusieurs lignes de stockage prévues dans le magasin, celui-ci n'exigeant pour sa gestion et son contrôle qu'un ensemble de commandes simples et faciles à mettre en oeuvre.

A cet effet, le magasin considéré, comportant une pluralité de lignes de stockage parallèles sur lesquelles peuvent être reçues des caissettes de forme générale parallélépipédique, identiques, provenant d'un convoyeur à tapis sur lequel ces caissettes sont reçues en provenance d'un poste de traitement situé en amont pour être ensuite acheminées vers un poste de traitement situé en aval du convoyeur, le magasin étant disposé en position intermédiaire entre ces deux postes, les lignes de stockage étant réparties selon au moins deux plans superposés, séparés par une distance au moins égale à la hauteur d'une caissette, se caractérise en ce qu'il comporte dans chaque plan un tapis d'entrée et un tapis de sortie parallèles l'un à l'autre pour le transfert des caissettes, respectivement sur et hors de l'une quelconque des lignes de stockage, ces tapis s'étendant perpendiculairement à la direction de ces lignes et comprenant chacun au moins un élément inclinable, propre à élever les caissettes d'un plan à l'autre, un déviateur escamotable prévu au droit d'une des extrémités de chaque ligne de stockage au-dessus du tapis d'entrée et un déviateur fixe à l'extrémité opposée de la ligne pour le renvoi des caissettes sur le tapis de sortie, des moyens pour faire avancer séquentiellement chaque caissette sur les lignes de stockage au fur et à mesure de son introduction sur une ligne donnée à partir du tapis d'entrée jusqu'à arrêt en fin de ligne par une butée effaçable, et des moyens pour évacuer la caissette consécutivement à l'effacement de la butée, pour l'amener sur le tapis de sortie.

Le magasin de stockage selon l'invention permet ainsi de recueillir les caissettes provenant du convoyeur en les distribuant à volonté sur une quelconque des diverses lignes de stockage prévues dans ce magasin, ces lignes s'étendant parallèlement à elles-mêmes et selon des plans superposés différents. Le tapis d'entrée, associé aux lignes de stockage d'un même plan, assure le déplacement de chaque caissette et son transfert sur la ligne choisie grâce aux déviateurs escamotables. Les caissettes successives sont, dans la ligne considérée, mises ainsi successivement l'une derrière l'autre puis avancées au fur et à mesure de l'arrivée de nouvelles caissettes, ceci jusqu'à ce que la caissette antérieure vienne en appui sur la butée effaçable à l'extrémité de la ligne considérée. A cet instant, la ligne est totalement occupée par un train de caissettes, le déviateur escamotable prévu au-dessus du tapis d'entrée étant effacé de telle sorte que les caissettes suivantes, acheminées par ce tapis, soient dirigées vers une autre ligne dont le propre déviateur est alors mis en oeuvre.

Pour extraire ensuite une caissette de la ligne considérée, la butée est effacée, tandis que la première caissette est transférée par des moyens appropriés sur le tapis de sortie d'où elle rejoint finalement le convoyeur. En outre, chacun des tapis d'entrée et de sortie peut, selon les nécessités de la gestion et de l'affectation des caissettes, assurer le passage de celles-ci d'un plan à l'autre dans le magasin, grâce aux éléments inclinables qu'ils comportent respectivement et qui, selon leurs positions, à plat ou basculée, réalisent le transfert de chaque caissette dans le même plan ou vers un plan différent.

Les divers paramètres de contrôle, (action sur les déviateurs escamotables, basculement des éléments inclinables des tapis d'entrée et de sortie, effacement des butées, commande des moyens d'avance et d'évacuation) sont avantageusement gérés par un automate programmable qui, de manière simple, notamment par lecture d'un code à barres sur chaque caissette, permet en permanence, le classement et la distribution de ces caissettes dans les diverses lignes du magasin, puis en temps choisi leur extraction et enfin leur renvoi vers le convoyeur pour le traitement souhaité du courrier qu'elles contiennent.

Selon une caractéristique particulière du magasin selon l'invention, les moyens d'avance des caissettes dans chaque ligne de stockage, comportent une courroie ronde, commandée en permanence entre deux poulies d'entraînement prévues aux extrémités de chaque ligne, dont l'une seulement est motrice, et un ensemble de poulies élévatrices, montées folles sur des bras pivotants propres à appliquer momentanément ces poulies élévatrices sous la courroie pour surélever celle-ci et la mettre en contact avec une portée d'appui prévue sous chaque caissette de telle sorte que l'entraînement de la courroie provoque le déplacement de la caissette aussi longtemps que cette courroie est au contact de la portée d'appui.

Avantageusement, les poulies élévatrices sont montées à rotation à une extrémité des bras pivotants sur des axes parallèles aux axes des poulies d'entraînement, l'autre extrémité de ces bras étant solidarisée d'un câble, lié d'une part à la tige mobile d'un premier vérin électromagnétique et d'autre part à un ressort de rappel de telle sorte que, en l'absence d'excitation du vérin, le ressort tire le câble dans le sens qui efface les poulies élévatrices vis-à-vis de la courroie.

Selon une autre caractéristique également, les moyens d'évacuation des caissettes comportent au moins une poulie élévatrice complémentaire, indépendante des poulies élévatrices des moyens d'avancée des caissettes, montée mobile sur un bras pivotant, commandé par un second câble fixé à une extrémité à un ressort de rappel et à l'autre à la tige d'un second vérin électromagnétique, cette tige faisant simultanément fonction de butée effaçable, pour arrêter les caissettes sur ligne de stockage.

Selon encore une autre caractéristique, la poulie d'entraînement de la courroie prévue à l'extrémité de celle-ci voisine du tapis de sortie, est agencée de telle sorte qu'elle commande l'entraînement concomitant de deux bandes, parallèles à la courroie, ces bandes étant montées à l'extrémité de la ligne de stockage après la butée effaçable de façon telle que chaque caissette, entraînée par les moyens d'évacuation, soit reprise par ces bandes pour être directement transférée sur le tapis de sortie.

Selon une caractéristique particulière complémentaire, chaque déviateur escamotable prévu à l'extrémité d'une ligne de stockage au voisinage du tapis d'entrée est constitué par un guide cintré, porté par au moins un support monté mobile sous l'effet d'un vérin électromagnétique réalisant, selon sa position, la mise en place ou l'effacement du guide par rapport aux caissettes, entraînées par le tapis d'entrée, le guide cintré ayant ses parties d'extrémité respectivement parallèles au tapis d'entrée et la ligne de stockage associée au déviateur de telle manière que, entraînée par le tapis, chaque caissette soit progressivement tournée sur elle-même de 90° environ par le guide pour s'engager sur la ligne de stockage. De préférence, chaque déviateur fixe est également constitué par un guide cintré, analogue à celui des déviateurs escamotables.

Selon une autre caractéristique complémentaire du magasin selon l'invention, les éléments inclinables des tapis d'entrée et/ou de sortie, comportent chacun une bande d'entraînement associée à la tige d'un vérin électro-magnétique, réalisant le soulèvement ou l'abaissement de la bande pour faire passer une caissette d'un plan à l'autre, contenant les lignes de stockage du magasin.

Les caissettes mises en jeu pour être stockées dans le magasin peuvent être quelconques quant à leur structure et leurs dimensions, pour autant néanmoins que ces dernières soient compatibles avec la distance qui sépare deux plans de stockage dans le magasin et la longueur de chaque ligne. Avantageusement, chaque caissette comporte un fond plat, muni d'une rainure en creux où s'engage la courroie d'entraînement et dont le fond constitue la portée d'appui de cette courroie sous l'effet des poulies élévatrices, la caissette reposant dans chaque ligne de stockage sur deux pistes d'appui planes, sur lesquelles elle glisse lors de son entraînement, en étant en outre guidée latéralement par deux butoirs transversaux. De préférence, les pistes sur lesquelles glisse la caissette sont réalisées en polyamide ou autre matière plastique appropriée, par exemple en téflon.

D'autres caractéristiques d'un magasin de stockage de caissettes établi conformément à l'invention apparaîtront encore à travers la description qui suit d'un exemple de réalisation, donné à titre indicatif et non limitatif, en référence aux dessins annexés sur lesquels :

- La Figure 1 est une vue en perspective générale du magasin de stockage considéré,
- La Figure 2 est une vue de côté à plus grande échelle du magasin de la Figure 1, illustrant le détail d'un des tapis notamment un tapis d'entrée, et des éléments inclinables permettant aux caissettes de passer d'un plan à l'autre du magasin,

- La Figure 3 est une vue de dessus, également à échelle différente du magasin, précisant la manière dont les caissettes sont mises en place ou retirées des lignes de stockage,

- La Figure 4 est une vue à encore plus grande échelle d'une caissette et d'un déviateur escamotable coopérant avec celle-ci, le déviateur étant représenté dans l'une et l'autre de ses deux positions possibles selon qu'il dévie une caissette vers une ligne de stockage ou laisse passer celle-ci.

- Les Figures 5, 6 et 7 sont des vues de détail illustrant les moyens mis en oeuvre pour faire avancer les caissettes dans les lignes de stockage ainsi que les moyens permettant leur évacuation commandée hors de ces lignes.

- Les Figures 8 et 9 sont des vues en coupe transversale à échelle aggrandie d'une caissette et des moyens d'entraînement de celle-ci, permettant de mieux faire comprendre la mise en oeuvre de ces derniers, illustrés respectivement en position inactive puis active.

- Les Figures 10 et 11 sont des vues schématiques de dessus du magasin considéré, destinées à expliquer le processus de gestion des caissettes au cours de leur stockage dans le magasin.

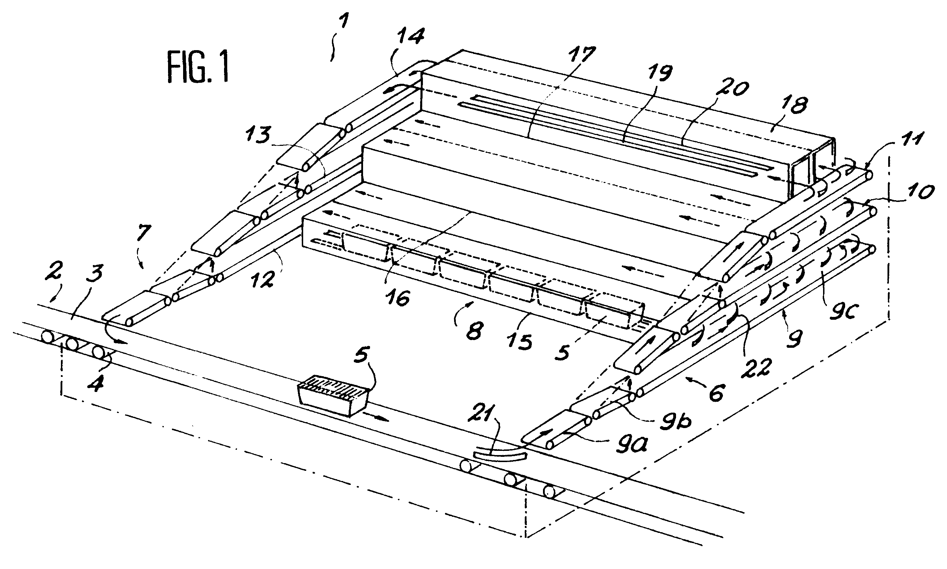

Sur la vue en perspective générale de la Figure 1, la référence 1 désigne le magasin selon l'invention considéré dans son ensemble. A celui-ci est notamment associé un convoyeur 2 à bande 3, entraîné par des rouleaux ou analogues 4, de manière à permettre un déplacement continu ou discontinu sur celui-ci de caissettes 5, contenant en particulier des enveloppes de courrier préalablement mises en place dans chaque caissette et qui seront ultérieurement extraites de celle-ci pour un tri final, avant acheminement vers leurs lieux de destination.

Les caissettes 5 peuvent au cours de leur mouvement depuis un poste amont (non représenté) où elles sont placées sur le convoyeur 2 jusqu'à un poste aval (également non représenté) où elles sont retirées du convoyeur, être momentanément stockées dans le magasin 1. A cet effet, celui-ci comporte principalement un ensemble 6 de tapis d'entrée, un ensemble 7 de tapis de sortie, s'étendant parallèlememt aux tapis de l'ensemble 6, et une série de lignes de stockage 8 perpendiculaires à la direction des tapis de ces deux ensembles 6 et 7.

Dans l'exemple de réalisation plus particulièrement représenté, les tapis d'entrée de l'ensemble 6 sont au nombre de trois, respectivement désignés sur la Figure sous les références 9, 10 et 11. A chacun des tapis d'entrée précédents, est associé un tapis de sortie, ceux-ci étant désignés sur le dessin sous les références 12, 13 et 14.

Les tapis d'entrée et les tapis de sortie sont par ailleurs répartis selon trois plans superposés, dans lesquels sont disposés les lignes de stockage 8, ces plans étant repérés sur la Figure sous les références 15, 16 et 17. Dans chaque plan, les lignes de stockage 8 sont matérialisées par un capot tel que 18 et comprennent chacun notamment deux pistes parallèles, respectivement 19 et 20, dont le détail de la réalisation sera explicité plus loin. Les caissettes 5 introduites dans les lignes de stockage glissent sur ces pistes, dans le sens indiqué sur le dessin par les flèches correspondantes, depuis les tapis d'entrée vers les tapis de sortie.

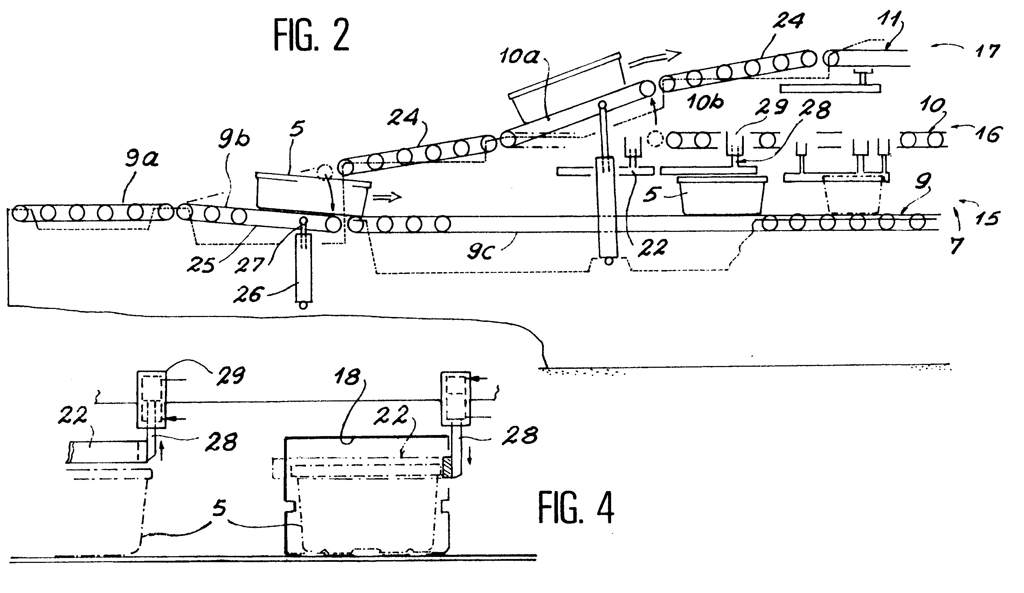

Les caissettes 5, destinées à être mises en place dans une quelconque des lignes de stockage 8 du magasin, sont extraites du convoyeur 2 au moyen d'un premier déviateur 21, en forme de guide cintré, schématiquement illustré sur le dessin de la Figure 1 et qui les renvoie ainsi sur le premier tapis d'entrée 9. Celui-ci, comme on le voit aussi sur la Figure 2, est constitué de trois éléments successifs, respectivement 9a, 9b et 9c, l'élément intermédiaire 9b étm=:ant susceptible d'être le cas échéant, basculé vers le haut, pour permettre, comme on le verra plus loin, le passage des caissettes 5 du plan 15 du tapis 9 au plan 16 du tapis 10 situé au-dessus, en particulier pour permettre le stockage de ces caissettes dans les lignes 8 correspondantes. La hauteur qui sépare les plans 15, 16 et 17 est bien entendu choisie au moins égale à celle des caissettes 5 afin de permettre l'introduction de celles-ci sans risque de blocage, dans les lignes de stockage successives au niveau de chacun des plans du magasin.

Dans l'exemple de réalisation représenté, le magasin de stockage 1 comporte trois plans superposés. En outre dans chacun de ceux-ci, le nombre des lignes est variable de l'un à l'autre pour autoriser le dégagement nécessaire au débattement des éléments intermédiaires basculables des tapis d'entrée, réalisant le passage des caissettes d'un plan à l'autre. Ainsi dans le même exemple, le nombre des lignes est choisi égal à six dans le plan 15, à quatre dans le plan 16 et à deux seulement dans le plan 17. Bien entendu, il va de soi que le nombre des plans et des lignes qu'ils contiennent pourraient être différents selon les besoins du stockage et de la gestion des caissettes dans les lignes correspondantes.

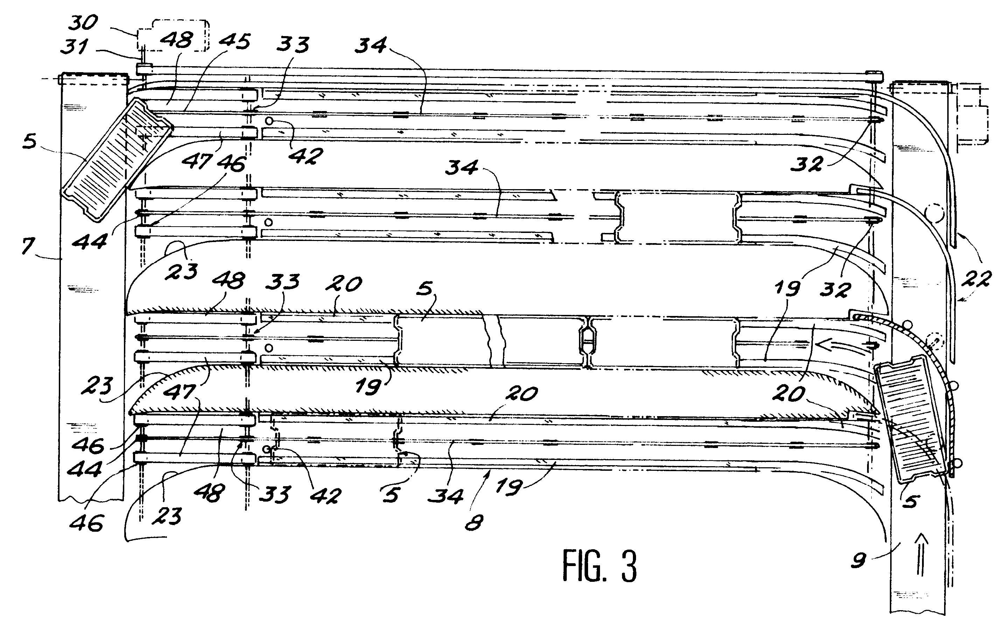

Les caissettes ainsi reçues sur l'un quelconque des tapis d'entrée sont, dans le plan choisi, déviées vers une ligne de stockage 8 sélectionnée de la façon précisée plus loin, au moyen d'un déviateur escamotable 22 qui, selon sa position, oriente la caissette 5 en la faisant pivoter sur elle-même d'environ 90°, afin de l'introduire dans la ligne. Lorsque le déviateur 22 est au contraire escamoté au-dessus de la caissette, il laisse alors celle-ci poursuivre son déplacement sur le tapis d'entrée correspondant comme le montre notamment la Figure 3. Chaque ligne de stockage comporte par ailleurs, à son extrémité opposée au déviateur escamotable 22, un déviateur fixe 23 de même profil ou de profil analogue, destiné à assurer le guidage des caissettes à la sortie de la ligne avec à nouveau un pivotement de 90° sur elles-mêmes, de manière à les renvoyer sur le tapis de sortie 7 associé et, par celui-ci, vers le convoyeur 2.

La Figure 2 montre à plus grande échelle le détail de la réalisation des trois tapis d'entrée 9, 10 et 11 et des éléments inclinables qui permettent de faire passer les caissettes d'un plan à l'autre dans le magasin de stockage 1. On retrouve notamment sur cette Figure, les trois parties 9a, 9b, 9c du premier tapis 9, l'élément intermédiaire 9b étant mobile vers le haut afin de permettre à une caissette 5 quelconque, initialement sur le tapis 9, d'être amenée sur le tapis 10 situé au dessus. De la même manière, le tapis 10 est lui-même constitué de deux éléments successifs 10a et 10b, l'élément 10a étant mobile pour permettre le passage des caissettes du tapis 10 au tapis 11. Des éléments intermédiaires non inclinables tels que 24 sont prévus entre les tapis 9 et 10 d'une part, 10 et 11 d'autre part pour assurer les liaisons nécessaires. Chacun des éléments inclinables 9b et 10a comporte une bande d'entraînement 25 et est associé à un vérin électromagnétique 26, dont le corps est monté fixe dans le chassis du magasin, la tige mobile 27 de ce vérin étant fixée à l'élément correspondant de telle sorte que, selon que le vérin est ou non commandé, la tige 27 étant sortie ou rétractée, l'élément 9b ou 10a soit amené sensiblement dans le plan du tapis 9 ou 10 repectivement ou au contraire basculé vers le haut, en réalisant alors l'élévation souhaitée de caissettes dans leurs mouvements de déplacement avec les tapis.

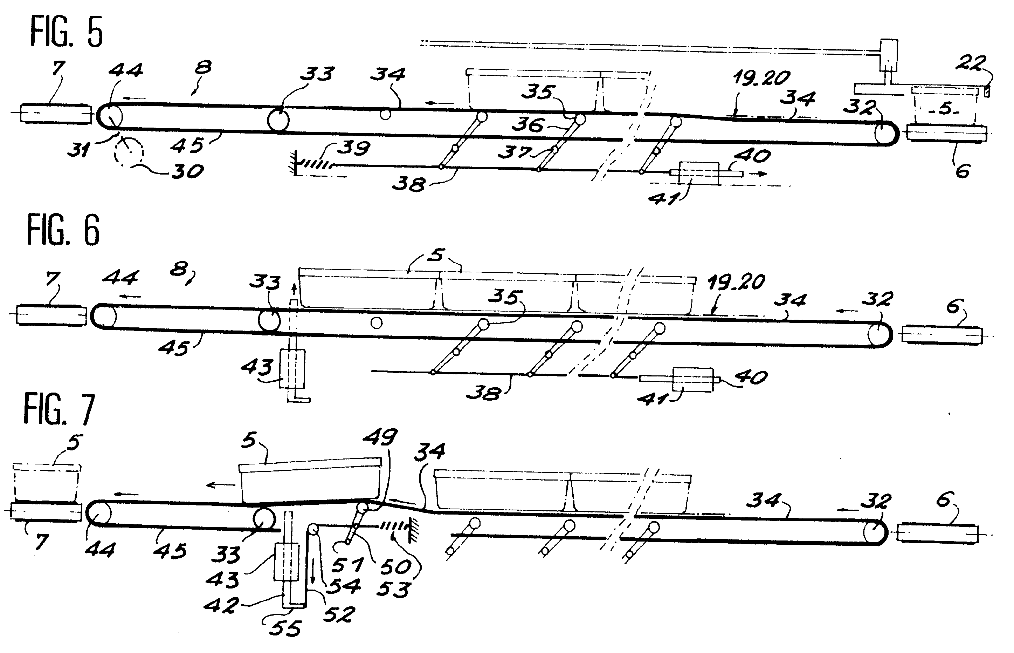

Les Figures 2 à 4 montrent également comment est indépendamment réalisée la commande des déviateurs mobiles 22 qui, dans chacun des plans du magasin, déterminent l'aiguillage des caissettes 5 vers l'une ou l'autre des lignes de stockage. Chaque déviateur 22 est notamment constitué par une lame de guidage cintrée (Figure 4), solidarisée de la tige mobile 28 d'un vérin électromagnétique 29, également fixé au chassis du magasin dans une position telle que, lorsque la tige 28 est rétractée, le déviateur 22 associé soit disposé au-dessus de la caissette (comme on peut le voir sur la partie gauche de la Figure 4) rendant le déviateur inactif. En revanche, lorsque la commande du vérin 29 provoque l'abaissement du déviateur, celui-ci vient coopérer avec les caissettes (voir la partie droite de la Figure 4 et la Figure 3) entraînées par le tapis d'entrée, ou les introduire dans la ligne de stockage correspondante de la manière déjà indiquée.

Les Figures 5 à 9 illustrent plus spécialement les moyens mis en oeuvre pour permettre l'avance pas à pas des caissettes 5 dans chacune des lignes de stockage 8 du magasin, lorsque celles-ci quittent le tapis d'entrée sous l'effet du déviateur escamotable, ainsi que les moyens permettant à l'extrémité de cette ligne, d'extraire une à une les caissettes préalablement introduites pour les renvoyer sur les tapis de sortie.

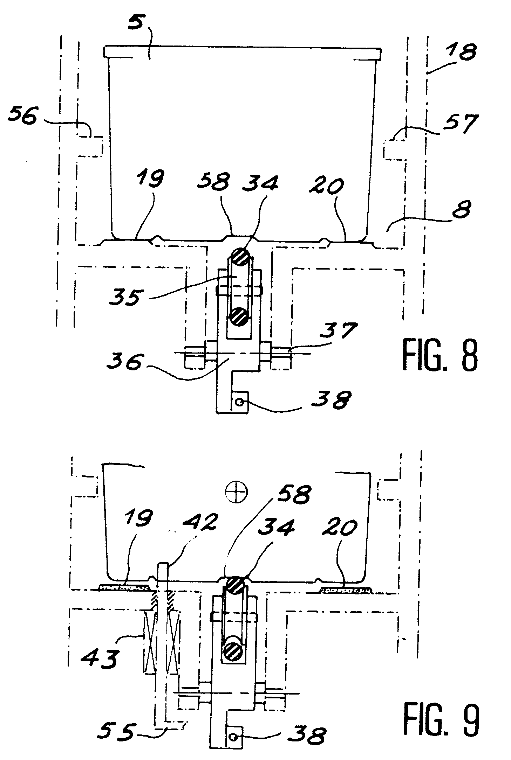

Le mouvement d'avance des caissettes est réalisé dans chacun des plans du magasin selon lesquels s'étendent les diverses lignes de stockage, au moyen d'un moteur unique 30 (Figure 3), dont l'axe de sortie 31 commande simultanément les moyens appropriés prévus dans chaque ligne. A cet effet, l'axe 31 supporte dans chaque ligne une poulie motrice 44 située à l'extrémité de cette ligne voisine du tapis de sortie 7. Une poulie de renvoi 32 est prévue également dans chaque ligne à l'extrémité opposée au voisinage du tapis d'entrée 6 situé dans le même plan. Chaque ligne comporte par ailleurs au moins une autre poulie de renvoi 33 située plus près du tapis de sortie 7 mais à distance de la poulie motrice 44. Sur les poulies 32 et 44 est montée dans chaque ligne une courroie ronde 34 dont les Figures 8 et 9 montrent à plus grande échelle, la section, cette courroie étant de préférence réalisée en caoutchouc ou autre matériau analogue présentant un coefficient de frottement approprié. Le montage de la poulie motrice 44 du côté du tapis de sortie 7 permet, si le mouvement des caissettes s'effectue comme il se doit depuis le tapis d'entrée vers le tapis de sortie correspondant, de maintenir le brin supérieur de la courroie tendu en traction. Les poulies 32, 33 et 44 sont également disposées de façon telle que la courroie 34 ait son brin supérieur qui s'étende longitudinalement dans la ligne de stockage 8 associée, de préférence mais non obligatoirement au centre de celle-ci, mais en tous cas à un niveau légèrement inférieur, de l'ordre de quelques millimètres, à celui du fond en regard des caissettes 5 portées à l'intérieur du capot 18 de la ligne par les pistes 19 et 20 (Figure 8). Pour réaliser l'entraînement des caissettes 5,sont alors prévues sous la courroie 34 des poulies élévatrices 35, montées folles autour d'axes prévus à l'extrémité de bras 36, susceptibles de pivoter chacun autour d'un axe 37, celui-ci s'étendant parallèlement à l'axe des poulies 32, 33, 35 et 44. A son extrémité opposée à la poulie élévatrice, chaque bras 36 est solidaire d'un câble 38, commun à l'ensemble des bras, ce câble étant lié à une extrémité à un ressort de rappel 39 et à l'autre à la tige 40 d'un vérin électromagnétique 41. Un ensemble analogue est prévu dans chacune des lignes 8, toutes les courroies étant entraînées en permanence et simultanément à partir de l'axe 31 du moteur 30.

Grâce aux dispositions ci-dessus, on conçoit aisément que la simple commande dans une ligne 8 donnée du vérin 41, en provoquant l'attraction de la tige 40, exerce une traction sur le câble 38 en tendant le ressort 39. Simultanément, les bras 36 pivotent autour de leurs axes 37 en déplaçant les poulies 35 sur une distance suffisante pour qu'elles viennent légèrement soulever la courroie 34, en appliquant celle-ci sous le fond des caissettes 5, qui peuvent alors être entraînées par la courroie du fait de son frottement sur ce fond. Les caissettes 5 sont ainsi une à une et successivement engagées sur la ligne de stockage à partir du tapis d'entrée puis au fur et à mesure avancées par un train de caissettes jusqu'à ce que la ligne soit complètement occupée, la caissette antérieure ou première caissette dans le sens du déplacement venant alors au contact d'une butée 42, schématiquement illustrée sur la Figure 6 notamment. La butée 42 est susceptible de s'effacer à la demande sous la commande d'un vérin électromagnétique 43.

L'extraction des caissettes 5 hors de la ligne 8 s'effectue par des moyens mis en oeuvre de manière distincte de ceux décrits ci-dessus réalisant l'entraînement de ces caissettes, en particulier pour renvoyer ces caissettes vers les tapis de sortie et le convoyeur, lorsque le stockage est achevé.

Pour réaliser cette extraction des caissettes une à une hors de chaque ligne 8, on utilise également le mouvement de la poulie motrice 44, commandant la courroie 34 dans sa partie d'extrémité 45. Sur l'axe de la poulie 44 sont en effet montées de part et d'autre de celle-ci d'autres poulies 46, propres à entraîner deux bandes latérales, respectivement 47 et 48, telles qu'une caissette 5 quelconque, amenée sur ces bandes, soit reprise par celles-ci et transférée jusqu'au tapis de sortie 7. Le passage de la caissette sur ces bandes s'effectue, d'une part en effaçant la butée 42 au moyen du vérin 43 et d'autre part, grâce à une poulie élévatrice complémentaire 49 (Figure 7). Cette poulie 49 est montée libre sur un bras 50, pivotant autour d'un axe 51 et dont l'extrémité est solidaire d'un câble 52 indépendant du câble 38 mais qui, comme ce dernier, est lié à une extrémité à un ressort de rappel 53 et à l'autre, après renvoi par une poulie 54, à un épaulement 55 ménagé en bout de la butée effaçable 42.

Grâce à cette disposition, on voit que la commande de la butée 42, en même temps qu'elle libère le train des caissettes stockées dans la ligne 8 en s'effaçant sous la première caissette, provoque simultanément le pivotement du bras 50 et le soulèvement de l'extrémité de la courroie 34 par la poulie 49, cette courroie 34 venant s'appliquer contre le fond de la première caissette, en entraînant celle-ci sur une distance suffisante pour qu'elle soit reprise par les bandes 47 et 48 et finalement renvoyée par celles-ci sur le tapis 7. Après évacuation de la première caissette, la butée 42 revient en place pour arrêter la seconde et ainsi de suite jusqu'à extraction de tout au partie du train des caissettes, celui-ci pouvant en outre, au fur et à mesure de ces extractions être complété par l'admission sur la ligne de nouvelles caissettes provenant du tapis d'entrée.

Les Figures 8 et 9 complètement utilement la description qui précède, notamment en illustrant la forme particulière des bras pivotants 36 (ou 50) et des poulies élévatrices (35 ou 49). Sur ces figures est représenté en traits mixtes le profil du capot 18 d'une ligne quelconque, comportant dans ses surfaces latérales des butoirs respectivement 5§ et 57 de guidage des caissettes 5 lors de leur déplacement dans la ligne. Ces figures montrent également les pistes 19 et 20 sur lesquelles glissent les caissettes, ces pistes étant avantageusement réalisées en une matière plastique appropriée, par exemple en téflon ou en polyamide. Enfin, on voit que dans l'exemple représenté, la courroie d'entraînement 34 est située sensiblement au centre de chaque ligne 8, les caissettes 5 comportant dans le milieu de leur fond en regard de la courroie, une rainure en creux 58 sur laquelle vient s'appliquer celle-ci lors de son soulèvement par les poulies élévatrices 35 (ou 49) pour le déplacement des caissettes. A noter que cette disposition n'est pas en elle-même indispensable, les caissettes pouvant avoir une configuration différente, par exemple sans rainure médiane, ou encore avec une ou plusieurs rainures, mais décalées latéralement.

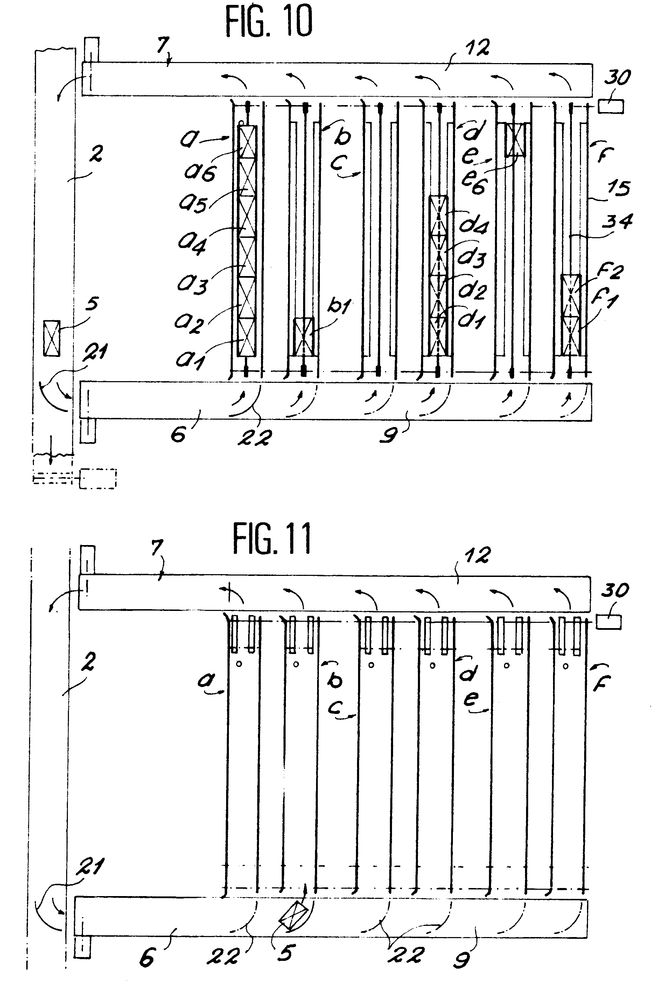

Les Figures 10 et 11 permettent enfin de mieux expliquer comment s'effectuent dans le magasin de stockage, les mouvements coordonnés des caissettes et la gestion automatisée de ces mouvements. Sur ces figures, les lignes de stockage 8 représentées, correspondant à celles du plan inférieur 15 du magasin 1, mettant en jeu les tapis d'entrée 9 et de sortie 12, sont au nombre de six, chaque ligne de stockage pouvant également contenir six caissettes, étant ici souligné que ces chiffres n'ont évidemment aucun caractère limitatif et que le magasin pourrait être conçu sur le même principe avec un nombre de lignes et une capacité de stockage des caissettes tout à fait différents. Les lignes sont ici repérées sous les références a, b, ... f, les caissettes 5 dans chaque ligne étant affectées, de l'entrée vers la sortie, des indices 1 à 6. Ainsi la première ligne $\underline{a}$ contient, lorsqu'elle est remplie, six caissettes a1, a2, ..., a6, la ligne b les caissettes b1, b2, ... , et ainsi de suite jusqu'à la ligne f.

Par le jeu des mouvements combinés du convoyeur 2, des tapis d'entrée et de sortie 9 et 12, des déviateurs escamotables 21 et 22, de la butée effaçable 42 de chaque ligne de stockage 8 et des vérins commandant des poulies élévatrices, respectivement 35 pour l'avance des caissettes dans les lignes et 49 pour l'extraction de ces caissettes hors de ces dernières, on conçoit que toutes les combinaisons possibles peuvent être envisagées, à la fois pour la mise en place des caissettes dans les lignes de stockage successives que pour modifier à volonté l'ordre de ces caissettes dans chaque ligne. Ainsi la caissette a4 par exemple, peut sans difficultés être extraite de la ligne a pour venir prendre la place de la caissette d3 ou de toute autre dans l'une quelconque des lignes du magasin 8. Dans ce cas, la ligne a étant supposée remplie par ses six caissettes, l'opération consistera à extraire d'abord les caissettes a6 puis a5, à amener celles-ci en attente sur une ligne libre quelconque, à extraire la caissette a4 puis à acheminer celle-ci, par le tapis 7, le convoyeur 2 et le tapis 6 jusqu'au niveau de la ligne d et enfin à la déplacer dans cette dernière pour lui faire occuper finalement la place de la caissette d4 souhaitée, la ligne d étant préalablement libérée des emplacements d1 à d4.

Toute autre répartition des caissettes dans le magasin peut bien entendu être envisagée, en combinant, en outre les lignes de stockage 8 d'un plan à l'autre du magasin. Les éléments élévateurs 9b, 10a ainsi que l'ensemble des autres moyens d'entraînement ou d'aiguillage sont de préférence gérés à partir d'un automate programmable, dont le détail de la réalisation est naturellement sans rapport direct avec l'objet de la présente invention, même s'il constitue un accessoire indispensable à son fonctionnement. Les caissettes sont en permanence suivies et contrôlées par lecteur de codes, notamment à barres, qu'elles comportent au moyen de capteurs ou cellules appropriés qui après traitement adapté des informations ainsi fournies, commandent les divers vérins 26, 29, 41, 43, et la mise en oeure du déviateurs et des butées associées. A chaque instant, le contenu des lignes est pris en mémoire et contrôlé par le processus de l'automate qui tient compte de l'ensemble des paramètres nécessaires, selon les dimensions des caissettes, le temps d'avance de celles-ci d'un pas donné, le début du tapis et du convoyeur etc... Le magasin selon l'invention permet ainsi de gérer un ensemble de plus de 1800 caissettes par heure, pour une vitesse de déplacement linéaire de l'ordre de 40 m/mm, le temps de stockage des caissettes pouvant être réduit à une valeur au plus égale à 18 s. pour une ligne contenant six caissettes, l'automate permettant une gestion continue du processus, aussi bien des entrées et sorties des caissettes que de leur tri et rangement dans les lignes.

**Revendications**

1. Magasin pour le stockage et la gestion des caissettes, en particulier contenant des plis postaux comportant une pluralité de lignes de stockage parallèles (8) sur lesquelles peuvent être reçues des caissettes (5) de forme générale parallélépipédique, identiques, provenant d'un convoyeur à tapis (2) sur lequel ces caissettes sont reçues en provenance d'un poste de traitement situé en amont pour être ensuite acheminées vers un poste de traitement situé en aval du convoyeur, le magasin (1) étant disposé en position intermédiaire entre ces deux postes, les lignes de stockage (8) étant réparties selon au moins deux plans superposés (15-16-17), séparés par une distance au moins égale à la hauteur d'une caissette (5), se caractérise en ce qu'il comporte dans chaque plan au moins un tapis d'entrée (6-9-10-11) et au moins un tapis de sortie (7-12-13-14), parallèles l'un à l'autre pour le transfert des caissettes, respectivement sur et hors de l'une quelconque des lignes de stockage, ces tapis s'étendant perpendiculairement à la direction de ces lignes et comprenant chacun au moins un élément inclinable (9a-10b), propre à élever les caissettes (5) d'un plan à l'autre, un déviateur escamotable (22) prévu au droit d'une des extrémités de chaque ligne de stockage (8) au-dessus du tapis d'entrée et un déviateur fixe (23) à l'extrémité opposée de la ligne pour le renvoi des caissettes sur le tapis de sortie, des moyens (34-35-41) pour faire avancer séquentiellement chaque caissette sur les lignes de stockage au fur et à mesure de son introduction sur une ligne donnée à partir du tapis d'entrée jusqu'à arrêt en fin de ligne par une butée effaçable (42), et des moyens (43-49-52) pour évacuer la caissette consécutivement à l'effacement de la butée, pour l'amener sur le tapis de sortie.

2. Magasin selon la revendication 1, caractérisé en ce que les moyens d'avance des caissettes dans chaque ligne de stockage (8) comportent une courroie ronde (34), commandée en permanence entre deux poulies (32-44) prévues aux extrémités de chaque ligne, dont l'une seulement (44) est motrice, et un ensemble de poulies élévatrices (35) sous la courroie pour surélever celle-ci et la mettre en contact avec une portée d'appui (58) prévue sous chaque caissette (5) de telle sorte que l'entraînement de la courrroie provoque le déplacement de la caissette aussi longtemps que cette courroie est au contact de la portée d'appui.

3. Magasin selon l'une des revendication 1 ou 2, caractérisé en ce que les poulies élévatrices (35) sont montées à rotation à une extrémité des bras pivotants (36) sur des axes (37) parallèles aux axes des poulies d'entraînement (32-33), l'autre extrémité de ces bras étant solidarisée d'un câble (38) lié d'une part à la tige mobile (40) d'un premier vérin électromagnétique (41) et d'autre part à un ressort de rappel (39) de telle sorte que, en l'absence d'excitation du vérin, le ressort tire le câble dans le sens qui efface les poulies élévatrices vis-à-vis de la courroie (34).

4. Magasin selon l'une quelconque des revendications 1 à 3, caractérisé en ce que les moyens d'évacuation des caissettes (5) comportent au moins une poulie élévatrice complémentaire (49), indépendante des poulies élévatrices (35) des moyens d'avance des caissettes, montée mobile sur un bras pivotant (50) commandé par un second câble (52) fixé à une extrémité à un ressort de rappel (58) et à l'autre à la tige d'un second vérin électromagnétique (43), cette tige faisant simultanément fonction de butée effaçable (42) pour arrêter les caissettes (5) sur la ligne de stockage (8).

5. Magasin selon l'une quelconque des revendications 1 à 4, caractérisé en ce que la poulie d'entraînement (44) de la courroie (34) prévu à l'extrémité de celle-ci voisine du tapis de sortie, est agencée de telle sorte qu'elle commande l'entraînement concomitant de deux bandes (47-48) parallèles à la courroie, ces bandes étant montées à l'extrémité de la ligne de stockage (8) après la butée effaçable (42) de façon telle que chaque caissette, entraînée par les moyens d'évacuation, soit reprise par ces bandes pour être directement transférée sur le tapis de sortie.

6. Magasin selon l'une quelconque des revendications 1 à 5, caractérisé en ce que chaque déviateur escamotable (22) prévu à l'extrémité d'une ligne de stockage au voisinage du tapis d'entrée est constitué par un guide cintré, porté par au moins un support (28) monté mobile sous l'effet d'un vérin électromagnétique (29) réalisant, selon sa position, la mise en place ou l'effacement du guide par rapport aux caissettes (5) entraînées par le tapis d'entrée (6), le guide cintré ayant ses parties d'extrémité respectivement parallèles au tapis d'entrée et à la ligne de stockage associée au déviateur de telle manière que, entraînée par le tapis, chaque caissette soit progressivement tournées sur elle-même de 90° environ par le guide pour s'engager sur la ligne de stockage.

7. Magasin selon la revendication 6, caractérisé en ce que chaque déviateur fixe (23) est également constitué par un guide cintré, analogue à celui des déviateurs escamotables (22).

8. Magasin selon l'une quelconque des revendications 1 à 7, caractérisé en ce que les éléments inclinables des tapis d'entrée (6) et/ou de sortie (7), comportent chacun une bande d'entraînement (9b-10a) associée à la tige (27) d'un vérin électromagnétique, réalisant le soulèvement ou l'abaissement de la bande pour faire passer une caissette d'un plan à l'autre contenant les lignes de stockage du magasin.

9. Magasin selon l'une quelconque des revendications 2 à 8, caractérisé en ce que chaque caissette (5) comporte un fond plat, muni d'une rainure en creux (58) où s'engage la courroie d'entraînement (34) et dont le fond constitue la portée d'appui de cette courroie sous l'effet des poulies élévatrices (35), la caissette reposant dans chaque ligne de stockage (8) sur deux pistes d'appui planes (19-20) sur lesquelles elle glisse lors de son entraînement.

10. Magasin selon la revendication 9, caractérisé en ce que chaque caissette (5) est guidée latéralement dans une ligne de stockage quelconque (8) par des butoirs transversaux (56-57).

11. Magasin selon la revendication 9, caractérisé en ce que les pistes de glissement (19-20) sont en matière plastique, notamment en polyamide ou en "téflon".

## Claims

1. A storage means for storing and managing boxes, particularly those containing postal communications comprising a plurality of parallel storage lines (8) on which boxes (5) of generally parallelepiped form and identical can be received from a belt conveyor (2) on which these boxes are received from a processing station situated upstream, the boxes then being routed to a processing station situated downstream of the conveyor, the storage means (1) being disposed in an intermediate position between these two stations, the storage lines (8) being distributed according to at least two superposed planes (15-16-17) separated by a distance at least equal to the height of one box (5), and characterised in that it comprises on each plane at least one intake belt (6-9-10-11) and at least one outlet belt (7-12-13-14), parallel with each other for the transfer of boxes respectively onto and out of any one of the storage lines, the said belts extending at right-angles to the direction of these lines and each comprising at least one inclinable element (9a-10b) adapted to raise the boxes (5) from one plane to the other, a retractable deflector (22) provided at right-angles to one of the ends of each storage line (8) above the intake belt and a fixed deflector (23) at the opposite end of the line to return the boxes to the outlet belt, means (34-35-41) for sequentially advancing each box onto the storage lines as and when they are introduced onto a given line from an intake line and until stopped at the end of the line by an effaceable abutment (42), and means (43-49-52) of removing the box following effacement of the abutment in order to convey it onto the outlet belt.

2. A storage means according to Claim 1, characterised in that the means of advancing boxes in each storage line (8) comprise a round belt (34) operated permanently between two pulleys (32-44) provided at the ends of each line, of which only one (44) is powered, and an assembly of elevator pulleys (35) under the belt for raising it and bringing it into contact with a bearing surface (58) provided under each box (5) so that the entraining action of the belt produces displacement of the box for as long as this belt is in contact with the bearing surface.

3. A storage means according to one of Claims 1 or 2, characterised in that the elevator pulleys (35) are rotatably mounted at one end of the pivoting arms (36) on spindles (37) parallel with the spindles of the drive pulleys (32-33), the other end of these arms being rigid with a cable (38) connected at one end to the movable rod (40) of a first electromagnetic jack (41) and at the other to a return spring (39) so that in the absence of any energising of the jack, the spring pulls the cable in the direction which moves aside the elevator pulleys vis-a-vis the belt (34).

4. A storage means according to any one of Claims 1 to 3, characterised in that the means of removing boxes (5) comprise at least one additional elevator pulley (49) independent of the elevator pulleys (35) of the box feed means, mounted for movement on a pivoting arm (50) operated by a second cable (52) fixed at one end to a return spring (58) and at the other to the rod of a second electromagnetic jack (43), this rod acting at the same time as an effaceable abutment (42) in order to stop the boxes (5) on the storage line (8).

5. A storage means according to any one of Claims 1 to 4, characterised in that the drive pulley (44) of the belt (34) provided at the end of this latter which is close to the outlet belt, is adapted to control the concomitant entrainment of two belts (47-48) which are parallel with the conveyor belt, the said belts (47-48) being mounted at the end of the storage line (8) after the effaceable abutment (42) so that each box entrained by the removal means is taken over by these belts (47-48) in order to be directly transferred to the outlet belt.

6. A storage means according to any one of Claims 1 to 5, characterised in that each retractable deflector (22) provided at the end of a storage line close to the intake belt consists of an arcuate guide carried by at least one support (28) mounted for movement under the effect of an electromagnetic jack (29) which, according to its position, either sets in place or effaces the guide in relation to the boxes (5) which are being entrained by the intake belt (6), the arcuate guide having its end portions respectively parallel with the intake belt and the storage line associated with the deflector so that each box, entrained by the belt, is progressively turned through approx. 90° on itself by the guide in order to engage the storage line.

7. A storage means according to Claim 6, characterised in that each fixed deflector (23) likewise consists of an arcuate guide similar to that of the retractable deflectors (22).

8. A storage means according to any one of Claims 1 to 7, characterised in that the inclinable elements of the intake belt (6) and/or outlet belt (7) each comprise a drive belt (9b-10a) associated with the rod (27) of an electromagnetic jack, producing a raising or lowering of the belt in order to transfer a box from one plane to the other containing storage lines within the storage means.

9. A storage means according to any one of Claims 2 to 8, characterised in that each box (5) has a flat bottom provided with a hollow groove (58) in which engages the drive belt (34) and the bottom of which constitutes the bearing surface of this belt under the effect of elevator pulleys (35), the box resting in each storage line (8) on two flat supporting tracks (19-20) on which the box slides while it is being entrained.

10. A storage means according to Claim 9, characterised in that each box (5) is laterally guided in any storage line (8) by transverse buffers (56-57).

11. A storage means according to Claim 9, characterised in that the sliding tracks (19-20) are of plastics material, particularly polyamide or "teflon"(R).

## Patentansprüche

1. Magazin zur Lagerung und Steuerung von Kästen, besonders solchen, die Postsendungen enthalten, mit einer Mehrzahl von parallelen Lagerstrecken (8), auf denen identische Kästen (5) von im ganzen Quaderform aufgenommen werden können, die von einer Bandfördervorrichtung (2) kommen, welche die von einer ihr vorangehenden Bearbeitungsstation kommenden Kästen aufnimmt und sie zu einer auf sie folgenden Bearbeitungsstation weiterleitet, wobei das Magazin (1) in einer Stellung zwischen diesen zwei Stationen angeordnet ist und die Lagerstrecken (8) in mindestens zwei übereinanderliegenden Ebenen (15, 16, 17) verteilt sind, die einen Abstand mindestens gleich der Höhe eines Kastens (5) voneinander haben, dadurch gekennzeichnet, daß es in jeder Ebene mindestens ein Eingangsförderband (6, 9, 10, 11) und mindestens ein Ausgangsförderband (7, 12, 13, 14) aufweist, die zueinander parallel sind, zum Transfer der Kassetten jeweils in eine und aus einer der Lagerstrecken dienen, sich senkrecht zur Richtung dieser Strecken erstrecken und jedes mindestens ein neigbares Element (9a, 10b), das zum Anheben der Kästen (5) von einer Ebene zur anderen dient, eine ausrückbare. Umlenkvorrichtung (22), die gerade vor einem der Enden jeder Lagerstrecke (8) oberhalb des Eingangsförderbandes vorgesehen ist, und eine feststehende Umlenkvorrichtung (23) am entgegengesetzten Ende der Strecke für die Umlenkung von Kästen auf das Ausgangsförderband aufweisen, wobei ferner eine Vorschubvorrichtung (34, 35, 41), um jeden Kasten in Folge auf den Lagerstrecken nach Maßgabe seiner Einführung auf eine bestimmte Lagerstrecke von dem Eingangsförderband her vorwärts zu bewegen, bis er am Ende der Strecke durch einen ausrückbaren Anschlag (42) angehalten wird, und eine Vorrichtung (43, 49, 52) zur Ausbringung des Kastens auf das Ausgangsförderband nach Ausschaltung des Anschlags vorgesehen sind.

2. Magazin nach Anspruch 1, dadurch gekennzeichnet, daß die Vorrichtung zum Vorschub der Kästen in jeder Lagerstrecke (8) einen runden Treibriemen (34) aufweist, der dauernd zwischen zwei an den Enden jeder Strecke vorgesehenen Riemenscheiben (32, 44) umläuft, von denen nur eine Antriebsscheibe (44) angetrieben ist, und eine Anordnung von Hubrollen (35) unter dem Treibriemen aufweist, um diesen anzuheben und in Berührung mit einer an jedem Kasten (5) vorgesehenen Anlagefläche (58) zu bringen, so daß der Antrieb des Treibriemens die Verschiebung des Kastens solange bewirkt, wie dieser Treibriemen die Anlagefläche berührt.

3. Magazin nach einem der Ansprüche 1 oder 2, dadurch gekennzeichnet, daß die Hubrollen (35) drehbar an einem Ende von Schwenkarmen (36) montiert sind, welche auf zu den Achsen der Riemenscheiben (32, 44) des Antriebs parallelen Achsen laufen, wobei das andere Ende dieser Arme fest mit einem Seil (38) verbunden ist, das einerseits mit der beweglichen Stange (40) eines ersten elektromagnetischen Stellglieds (41) und andererseits mit einer Rückstellfeder (39) verbunden ist, so daß bei abgeschaltetem elektromagnetischen Stellglied die Feder das Seil in Richtung des Abzugs der Hubrollen vom Treibriemen (34) zieht.

4. Magazin nach einem der Ansprüche 1 bis 3, dadurch gekennzeichnet, daß die Vorrichtung zum Ausbringen der Kästen (5) mindestens eine zusätzliche Hubrolle (49) aufweist, welche von den Hubrollen (35) der Vorrichtung zum Vorschub der Kästen unabhängig und beweglich an einem Schwenkarm (50) montiert ist, der von einem zweiten Seil (52) gesteuert ist, das an einem Ende einer Rückstellfeder (58) und am anderen Ende an der Stange eines zweiten elektromagnetischen Stellglieds (43) befestigt ist, wobei diese Stange gleichzeitig als ausrückbarer Anschlag (42) zum Anhalten der Kästen (5) auf der Lagerstrecke (8) dient.

5. Magazin nach einem der Ansprüche 1 bis 4, dadurch gekennzeichnet, daß die Antriebsscheibe (44) des Treibriemens (34), die an dessen dem Ausgangsförderband benachbarten Ende vorgesehen ist, so ausgebildet ist, daß sie gleichzeitig den Antrieb von zwei zum Treibriemen parallelen Bändern (47, 48) steuert, welche am Ende der Lagerstrecke (8) nach dem ausrückbaren Anschlag (42) montiert sind, so daß jeder Kasten, der von der Ausbringvorrichtung angetrieben ist, von diesen Bändern aufgenommen und unmittelbar auf das Ausgangsförderband weitergeleitet wird.

6. Magazin nach einem der Ansprüche 1 bis 5, dadurch gekennzeichnet, daß jede am Ende einer Lagerstrecke in der Nähe des Eingangsförderbandes vorgesehene ausrückbare Umlenkvorrichtung (22) aus einer gewölbten Führung besteht, die von mindestens einem Halter (28) getragen ist, der unter der Wirkung eines elektromagnetischen Stellglieds (29) beweglich gehalten ist, das je nach seiner Stellung die Führung bezüglich der vom Eingangsförderband (6) angetriebenen Kästen (5) ein- oder ausschaltet, wobei die Endabschnitte der gewölbten Führung jeweils zum Eingangsförderband und der zur Umlenkvorrichtung gehörenden Lagerstrecke parallel sind, so daß jeder vom Eingangsförderband angetriebene Kasten durch die Führung allmählich um etwa 90° um sich selbst gedreht wird, um auf die Lagerstrecke zu gelangen.

7. Magazin nach Anspruch 6, dadurch gekennzeichnet, daß jede feststehende Umlenkvorrichtung (23) auch von einer gewölbten Führung entsprechend derjenigen der ausrückbaren Umlenkvorrichtungen (22) gebildet ist.

8. Magazin nach einem der Ansprüche 1 bis 7, dadurch gekennzeichnet, daß die neigbaren Elemente des Eingangsförderbandes (6) und/oder des Ausgangsförderbandes (7) jedes ein Förderband (9b, 10a) aufweisen, das mit der Stange (27) eines elektromagnetischen Stellgliedes zusammenwirkt,welches das Anheben oder Absenken des Bandes bewirkt, um einen Kasten von einer zur anderen der Ebenen zu führen, welche die Lagerstrecken des Magazins enthalten.

9. Magazin nach einem der Ansprüche 2 bis 8, dadurch gekennzeichnet, daß jeder Kasten (5) einen ebenen Boden aufweist, der mit einer ausgehöhlten Rinne (58) versehen ist, wo der Antriebsriemen (34) angreift und deren Boden die Anlagefläche für diesen Treibriemen bildet, wenn dieser der Wirkung der Hubrollen (35) unterliegt, wobei der Kasten in jeder Lagerstrecke (8) auf zwei ebenen Gleitleisten (19, 20) ruht, auf denen er bei seiner angetriebenen Bewegung gleitet.

10. Magazin nach Anspruch 9, dadurch gekennzeichnet, daß jeder Kasten (5) in einer beliebigen Lagerstrecke (8) durch Querpuffer (56, 57) seitlich geführt ist.

11. Magazin nach Anspruch 9, dadurch gekennzeichnet, daß die Gleitleisten (19, 20) aus Kunststoff, besonders aus Polyamid oder Teflon bestehen.

FIG.1

FIG. 2

FIG. 4

EP 0 373 060 B1

FIG. 3

EP 0 373 060 B1

FIG. 5

FIG. 6

FIG. 7

FIG. 8

FIG. 9

## FIG. 10

## FIG. 11